# EUROPEAN PATENT SPECIFICATION

(11) **EP 3 742 645 B1**
(45) Date of publication and mention of the grant of the patent: **15.12.2021**
(21) Application number: 19175856.4
(22) Date of filing: 22.05.2019
(51) Int. Cl.: H04L 1/18, H04L 1/00

(54) **NACK SUPPRESSION IN TDMA COMMUNICATIONS**
NACK-UNTERDRÜCKUNG IN TDMA-KOMMUNIKATIONEN
SUPPRESSION NACK DANS DES COMMUNICATIONS TDMA

(43) Date of publication of application: 25.11.2020
(73) Proprietor: Rohde & Schwarz GmbH & Co. KG, 81671 München (DE)
(72) Inventor: Bäßler, Andreas, 85253 Eisenhofen (DE); Wagner, Lars, 81827 München (DE)
(74) Representative: Rupp, Christian

(56) References cited:
- EP-A1- 1 631 000
- WO-A1-02/01803
- WO-A1-2009/157902
- US-A1- 2018 069 664

## Description

The invention relates to Not-Acknowledge (NACK) signaling in radio communications systems, especially Time Division Multiple Access (TDMA) systems.

In a radio communications network, packets are to be delivered in a most robust manner to one or more participants.

If NACK signaling is implemented, participants having a low transmission channel quality to a source transceiver, will often not correctly receive the data packets and therefore often transmit NACK signals, requesting for retransmissions of data packets.

Especially in multicast environments, in which the source transceiver transmits multicast data packets to a plurality of further transceivers, the use of NACK signaling can therefore lead to a minority of participants with a low transmission channel quality requiring a retransmission of a high ratio of the transmitted multicast data packets, significantly reducing the spectral efficiency of the entire communications system.

For example, EP 1 635 516 B1 shows an according radio packet communication method. EP 1 631 000 A1 (MATSISHITA ELECTRIC IND CO LTD [JP], published on 1 March 2006, shows a multicast system where the transmitter indicates to further transceivers whether to participate in feedback signaling.

Accordingly, the object of the invention is to provide a communications system and method, which allow for a robust transmission of data packets in communications systems with varying channel quality.

The object is solved by the features of claim 1 for the system and claim 8 for the method. Further it is solved by the features of claim 9 for the associated computer program. The dependent claims contain further developments.

An inventive direct radio transmission communications system is provided according to independent claim 1.

Advantageously, the source transceiver is configured to indicate to participate in NACK signaling and/or not to participate in NACK signaling, using a NACK participation bit. This allows for a very efficient signaling.

The source transceiver and/or each of the plurality of further transceivers are configured to determine a transmission channel quality of transmission channels between the source transceiver and each of the plurality of further transceivers. This allows for selectively deciding which further transceiver to allow to participate in NACK signaling.

Advantageously, at least one of the plurality of further transceivers, connected to the source transceiver by a transmission channel of a channel quality above a quality threshold, is configured to operate as a relay node with regard to the source transceiver and at least one of the plurality of further transceivers, connected to the source transceiver by a transmission channel of a channel quality below the quality threshold. This allows to mitigate the effects of a low transmission channel quality of the direct channel.

Preferably the source transceiver is configured to instruct each of the plurality of further transceivers connected to the source transceiver through a relay node to not participate in NACK signaling with regard to the source transceiver, and/or to instruct each of the plurality of further transceivers connected to the source transceiver by a transmission channel of a channel quality above the quality threshold to participate in NACK signaling with regard to the source transceiver. This assures that further transceivers connected through a relay node to not negatively influence the NACK signaling by the other further transceivers.

Advantageously, each of the plurality of further transceivers operating as a relay node is configured to individually indicate to each of the plurality of other further transceivers and to the source transceiver to participate in NACK signaling with regard to the relay node, and/or not to participate in NACK signaling with regard to the relay node, and wherein each of the plurality of other further transceivers and the source transceiver is configured to participate in NACK signaling with regard to the relay node, if the relay node has indicated to participate in NACK signaling with regard to the relay node, and not to participate in NACK signaling with regard to the relay node, if the relay node has indicated not to participate in NACK signaling with regard to the relay node. This allows for extending the NACK signaling indication to relay node chains.

Preferably, the source transceiver is configured to transmit a data packet, as a multicast data packet, to the plurality of further transceivers. Each of the plurality of further transceivers is configured to, if it has not received the data packet successfully, and if the source transceiver has indicated to participate in NACK signaling with regard to the source transceiver, to transmit a NACK signal to the source transceiver, indicating that data packet has not been received successfully. Each of the plurality of further transceivers is configured to, if it has not received the data packet successfully, and if the source transceiver has indicated not to participate in NACK signaling with regard to the source transceiver, to not transmit a NACK signal to the source transceiver. This allows for a very efficient multicast transmission.

An inventive direct radio transmission communication method is provided according to independent claim 8.

An inventive computer program is provided according to independent claim 9.

Exemplary embodiments of the invention are now further explained with regard to the drawings in which
FIG. 1 shows a first embodiment of the communications system;
FIG. 2 shows a detail of a second embodiment of the communications system, and
FIG. 3 shows an embodiment of the inventive method. First, we demonstrate the general function of an according communications systems along FIG. 1. With regard to FIG. 2, further details of the function of the inventive communications system are described. Finally, along FIG. 3 an embodiment of the inventive method is shown and described in detail. Similar entities and reference numbers in different figures have been partially omitted.

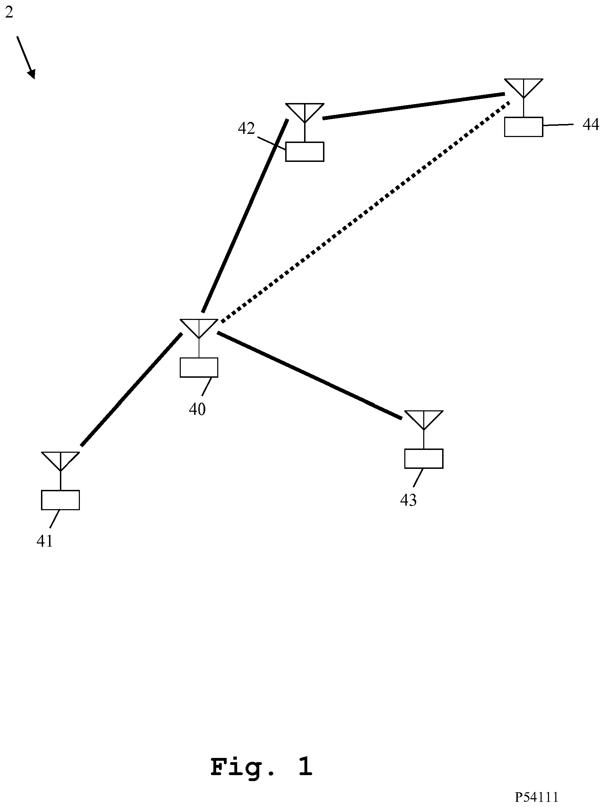

In FIG. 1, an embodiment of the inventive communications system 2 is shown. The communications system 2 comprises a source transceiver 40 and a number of further transceivers 41, 42, 43, 44.

Each of the transceivers 40 - 44 is not only able to transmit signals, but also to receive signals. Therefore, the signals transmitted by the source transceiver 40 are ideally received by the further transceivers 41 - 44. Signals transmitted by any of the further transceivers 41 - 44 are ideally received by the source transceiver 40.

The transmission channels between the source transceiver 40 and the further transceivers 41 - 44 though are real-world lossy transmission channels. Therefore, it is not guaranteed that every transmission by one of the transceivers 40 - 44 can be successfully received by all target transceivers.

Here the source transceiver 40 is connected to the further transceivers 41 - 43 through transmission channels having a transmission channel quality above a quality threshold, and the source transceiver 40 is connected to the further transceiver 44 through transmission channel having a transmission channel quality below a quality threshold. This is indicated by the solid and broken lines in FIG. 4.

In a multicast environment, the source transceiver 40 sends out multicast transmissions to all of the further transceivers 41 - 44. The transmissions consist of multicast data packets. If a multicast data packet or a fragment of a multicast data packet is not received correctly, the respective transceiver 41 - 44 can send a NACK signal, indicating that the specific multicast data packet or fragment of a multicast data packet was not received correctly.

If all further transceivers 41 - 44 were configured identically, then the low quality of the transmission channel to the further transceiver 44 would lead to a high number multicast data packets not being correctly received by the further transceiver 44, and a high number of NACK signals being sent by the further transceiver 44. This would result in a high number of multicast data packets being re-transmitted by the source transceiver 40, so that even the further transceiver 44 can receive them correctly. This would significantly clog up the transmission throughout the entire communications system 2.

This is dealt with by not allowing transceivers having a channel quality below the channel quality threshold to participate in NACK signaling with regard to the source transceiver 40. This is advantageously done by transmitting by the source transceiver 40, a signal indicating to the further transceiver 44 to not participate in NACK signaling with regard to the source transceiver 40. This signal could also be sent by a central authority or one of the other further transceiver 41, 42, 43, though. Preferably a single bit can be used for this signaling.

As a reaction to this signaling, the further transceiver 44 does not indicate to the source transceiver 40 that it has not successfully received certain multicast data packets, and the source transceiver 40 only re-transmits multicast data packets in reaction to NACK signals from the further transceivers 41 - 43.

This leads to the disadvantage that the further transceiver 44 does not successfully receive all multicast data packets. This though can be mitigated by operating one of the other further transceivers 41 - 43 as a relay node between the source transceiver 40 and the further transceiver 44. Here, the further transceiver 42 operates as such a relay node.

A most secure communication can be achieved by informing both transceivers to participate in NACK signaling as well as transceivers not to participate in NACK signaling of the fact.

Also, this system can be extended to relay chains. In this case, every transceiver not directly connected to the source transceiver in a relay chain may be instructed not to participate in NACK signaling with regard to the source transceiver. On the other hand, each transceiver may communicate to further away lying transceivers in the relay chain that they are not to participate in NACK signaling with regard to them.

Especially, NACK signaling should only be performed along the relay chain between directly neighboring transceivers, but not skipping individual links of the relay chain. Advantageously, each individual transceiver in the communications system 2 can indicate to all other transceivers in the communications system 2 whether to participate in NACK signaling with regard to it or not.

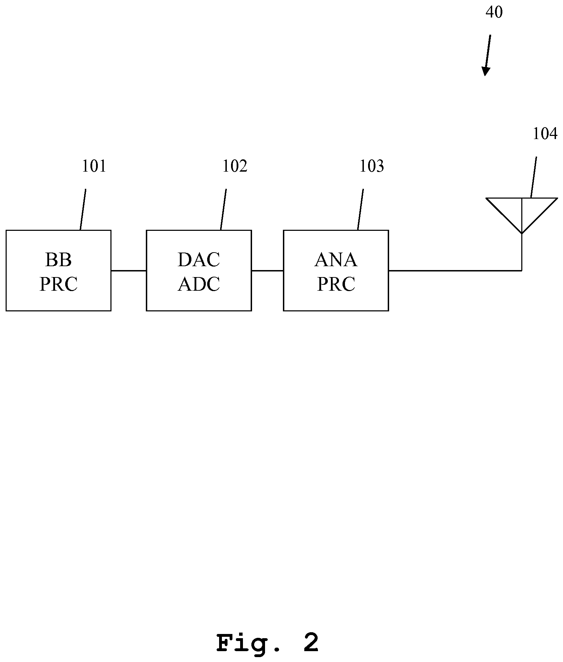

In FIG. 2, a second embodiment of the inventive communications system is shown. Especially here, some more detail of the inner construction of one of the transceivers 40 - 44 is shown. Although in FIG. 2, an exemplary inner construction of transceiver 40 is shown, the construction may be similar also for the transceivers 41 - 44.

In FIG. 2, the transceiver 40 comprises a baseband processor 101 connected to a digital-analog-converter / analog-digital-converter 102, which in turn is connected to an analog processor 103. The analog processor 103 is again connected to an antenna 104.

When transmitting a signal, a digital baseband signal is generated by the baseband processor 101 and handed on to the digital-analog-converter / analog-digital-converter 102, which converts it to an analog baseband signal. This analog baseband signal is then handed on to the analog processor 103, which converts it to an analog radio frequency signal, which is handed on to the antenna 104 and successively transmitted. The digital baseband signal 101 comprises a number of data packets.

For example, the baseband processor 101 may comprise a data packet generator, which is configured to convert payload data into data packets.

Moreover, the baseband processor 101 may comprise a source coder configured to add redundancy to the payload data before forming packets therefrom by the packet generator.

The baseband processor 101 may furthermore comprise a digital modulator, configured for performing a modulation to an intermediate frequency.

Moreover, the analog processor 103 may comprise a first bandpass filter configured to remove out of band signal components from the analog baseband signal provided by the digital analog converter/analog digital converter 102.

The analog processor 103 may furthermore comprise a mixer, configured to mix the analog baseband signal or the filtered analog baseband signal with a local oscillator signal in order to achieve a transmission frequency of the analog radio frequency signal. Furthermore, the analog processor 103 may additionally comprise a second bandpass filter for removing out of band components of the signal mixed by the mixer.

When receiving a signal, an analog radio frequency signal is received by the antenna 104 and handed on to the analog processor 103. The analog processor 103 converts it to an analog baseband signal and hands it on to the digital-analog-converter / analog-digital-converter 102, which converts it to a digital baseband signal. The digital baseband signal was handed on to the baseband processor 101, which receives the digital baseband signal and performs further processing thereupon.

Also, a received analog radio frequency signal may comprise data packets, which can then be extracted from the digital baseband signal.

Also, on the reception path, the before-mentioned components of the baseband processor 101 and the analog processor 103 may be used.

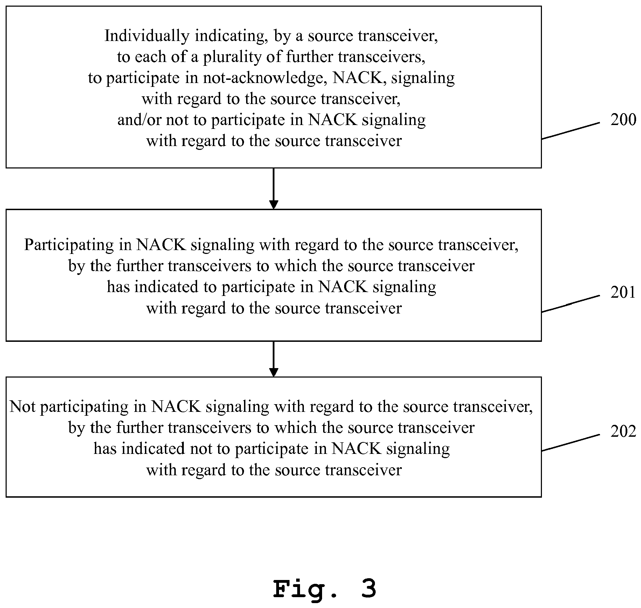

In FIG. 3, an embodiment of the inventive method is shown in a flow diagram.

In a first step 100, it is individually indicated, by a source transceiver, to each of a plurality of further transceivers, to participate in not-acknowledge, NACK, signaling with regard to the source transceiver, and/or not to participate in NACK signaling with regard to the source transceiver.

In a second step 101, the further transceivers to which the source transceiver has indicated to participate in NACK signaling with regard to the source transceiver, participate in NACK signaling with regard to the source transceiver.

In a third step 102, the further transceivers to which the source transceiver has indicated not to participate in NACK signaling with regard to the source transceiver, do not participate in NACK signaling with regard to the source transceiver.

Steps 101 and 102 in practice happen at the same time, since only one of them is actually performed for each transceiver.

It should be noted that the elaborations regarding FIG. 1 and 2 is also to be understood as disclosed with regard to the inventive method while on the other hand the elaborations regarding FIG. 3 are also to be understood as disclosed in regard to the inventive communications system.

The invention is not limited to the provided examples and especially not to a specific communication standard. The invention may be applied to many different communication standards. The characteristics of the exemplary embodiments can be used in any advantageous combination that falls under the scope of the appended claims.

## Claims

1. A direct radio transmission communication system (2), comprising a source transceiver (40), and a plurality of further transceivers (41, 42, 43, 44),
wherein the source transceiver (40) is configured to individually indicate to each of the plurality of further transceivers (41, 42, 43, 44) to
- participate in not-acknowledge, NACK, signaling with regard to the source transceiver (40), if a channel quality of the individual of the further transceivers (41, 42, 43, 44) is above a channel quality threshold, and
- not to participate in NACK signaling with regard to the source transceiver (40), if the channel quality of the individual of the further transceivers (41, 42, 43, 44) is below the channel quality threshold, and
wherein each of the plurality of further transceivers (41, 42, 43, 44) is configured to
- participate in NACK signaling with regard to the source transceiver (40), if the source transceiver (40) has indicated to participate in NACK signaling with regard to the source transceiver (40), and
- not participate in NACK signaling with regard to the source transceiver (40), if the source transceiver (40) has indicated not to participate in NACK signaling with regard to the source transceiver (40).

2. The direct radio transmission communication system (2) according to claim 1,
wherein the source transceiver is configured to indicate to participate in NACK signaling and/or not to participate in NACK signaling, using a NACK participation bit.

3. The direct radio transmission communication system (2) according to claim 1 or 2,
wherein source transceiver (40) and/or each of the plurality of further transceivers (41, 42, 43, 44) are configured to determine a transmission channel quality of transmission channels between the source transceiver and each of the plurality of further transceivers (41, 42, 43, 44) .

4. The direct radio transmission communication system (2) according to claim 3,
wherein at least one of the plurality of further transceivers (42) connected to the source transceiver (40) by a transmission channel of a channel quality above a quality threshold is configured to operate as a relay node with regard to the source transceiver and at least one of the plurality of further transceivers (44) connected to the source transceiver (40) by a transmission channel of a channel quality below the quality threshold.

5. The direct radio transmission communication system (2) according to claim 4,
wherein source transceiver (40) is configured to instruct each of the plurality of further transceivers connected to the source transceiver (40) through a relay node (42) to either
- not participate in NACK signaling with regard to the source transceiver (40), or
- participate in NACK signaling with regard to the source transceiver (40).

6. The direct radio transmission communication system (2) according to any of the claims 1 to 5,
wherein each of the plurality of further transceivers operating as a relay node (42) is configured to individually indicate to each of the plurality of other further transceivers (41, 43, 44) and to the source transceiver (40) to participate in NACK signaling with regard to the relay node (42), and/or not to participate in NACK signaling with regard to the relay node (42), and wherein each of the plurality of other further transceivers (41, 43, 44) and the source transceiver (40) is configured
- to participate in NACK signaling with regard to the relay node (42), if the relay node (42)has indicated to participate in NACK signaling with regard to the relay node (42), and
- not to participate in NACK signaling with regard to the relay node (42), if the relay node (42)has indicated not to participate in NACK signaling with regard to the relay node (42).

7. The direct radio transmission communication system (2) according to any of the claims 1 to 6,
wherein the source transceiver (40) is configured to transmit a data packet, as a multicast data packet, to the plurality of further transceivers (41, 42, 43, 44), wherein each of the plurality of further transceivers (41, 42, 43, 44) is configured to, if it has not received the data packet successfully,
- and if the source transceiver (40) has indicated to participate in NACK signaling with regard to the source transceiver (40), to transmit a NACK signal to the source transceiver (40), indicating that data packet has not been received successfully,
- and if the source transceiver (40) has indicated not to participate in NACK signaling with regard to the source transceiver (40), to not transmit a NACK signal to the source transceiver (40).

8. A direct radio transmission communication method, comprising:
- individually indicating, by a source transceiver (40), to each of a plurality of further transceivers (41, 42, 43, 44), to
o participate in not-acknowledge, NACK, signaling with regard to the source transceiver (40), if a channel quality of the individual of the further transceivers (41, 42, 43, 44) is above a channel quality threshold, and
o not to participate in NACK signaling with regard to the source transceiver (40), if the channel quality of the individual of the further transceivers (41, 42, 43, 44) is below the channel quality threshold,
- participating in NACK signaling with regard to the source transceiver (40), by the further transceivers (41, 42, 43, 44) to which the source transceiver (40) has indicated to participate in NACK signaling with regard to the source transceiver (40), and
- not participating in NACK signaling with regard to the source transceiver (40), by the further transceivers (41, 42, 43, 44) to which the source transceiver (40) has indicated not to participate in NACK signaling with regard to the source transceiver (40) .

9. A computer program comprising instructions which, when the program is executed by a computer, cause the computer to carry out the method of claim 8.

## Patentansprüche

1. Kommunikationssystem (2) für direkte Funkübertragungen, das einen Quellsendeempfänger (40) und eine Vielzahl von weiteren Sendeempfängern (41, 42, 43, 44) umfasst,
wobei der Quellsendeempfänger (40) dazu ausgelegt ist, jedem der Vielzahl von weiteren Sendeempfängern (41, 42, 43, 44) einzeln anzuzeigen
- an einer Nichtbestätigungs(NACK)-Signalisierung mit Bezug auf den Quellsendeempfänger (40) teilzunehmen, wenn eine Kanalqualität des einzelnen der weiteren Sendeempfänger (41, 42, 43, 44) über einem Kanalqualitätsschwellwert liegt, und
- nicht an einer NACK-Signalisierung mit Bezug auf den Quellsendeempfänger (40) teilzunehmen, wenn die Kanalqualität des einzelnen der weiteren Sendeempfänger (41, 42, 43, 44) unter dem Kanalqualitätsschwellwert liegt, und
wobei jeder der Vielzahl von weiteren Sendeempfängern (41, 42, 43, 44) dazu ausgelegt ist
- an einer NACK-Signalisierung mit Bezug auf den Quellsendeempfänger (40) teilzunehmen, wenn der Quellsendeempfänger (40) angezeigt hat, an einer NACK-Signalisierung mit Bezug auf den Quellsendeempfänger (40) teilzunehmen, und
- nicht an einer NACK-Signalisierung mit Bezug auf den Quellsendeempfänger (40) teilzunehmen, wenn der Quellsendeempfänger (40) angezeigt hat, an einer NACK-Signalisierung mit Bezug auf den Quellsendeempfänger (40) nicht teilzunehmen.

2. Kommunikationssystem (2) für direkte Funkübertragungen nach Anspruch 1,
wobei der Quellsendeempfänger dazu ausgelegt ist, unter Verwendung eines NACK-Teilnahmebits anzuzeigen, an einer NACK-Signalisierung teilzunehmen und/oder nicht an einer NACK-Signalisierung teilzunehmen.

3. Kommunikationssystem (2) für direkte Funkübertragungen nach Anspruch 1 oder 2,
wobei der Quellsendeempfänger (40) und/oder jeder der Vielzahl von weiteren Sendeempfängern (41, 42, 43, 44) dazu ausgelegt sind, eine Übertragungskanalqualität von Übertragungskanälen zwischen dem Quellsendeempfänger und jedem der Vielzahl von weiteren Sendeempfängern (41, 42, 43, 44) zu bestimmen.

4. Kommunikationssystem (2) für direkte Funkübertragungen nach Anspruch 3,
wobei mindestens einer der Vielzahl von weiteren Sendeempfängern (42), der über einen Übertragungskanal einer Kanalqualität über einem Qualitätsschwellwert mit dem Quellsendeempfänger (40) verbunden ist, dazu ausgelegt ist, mit Bezug auf den Quellsendeempfänger und mindestens einen der Vielzahl von weiteren Sendeempfängern (44), der über einen Übertragungskanal einer Kanalqualität unter dem Qualitätsschwellwert mit dem Quellsendeempfänger (40) verbunden ist, als ein Weiterleitungsknoten betrieben zu werden.

5. Kommunikationssystem (2) für direkte Funkübertragungen nach Anspruch 4,
wobei der Quellsendeempfänger (40) dazu ausgelegt ist, jeden der Vielzahl von weiteren Sendeempfängern, die über einen Weiterleitungsknoten (42) mit dem Quellsendeempfänger (40) verbunden sind, anzuweisen, entweder
- nicht an einer NACK-Signalisierung mit Bezug auf den Quellsendeempfänger (40) teilzunehmen, oder
- an einer NACK-Signalisierung mit Bezug auf den Quellsendeempfänger (40) teilzunehmen.

6. Kommunikationssystem (2) für direkte Funkübertragungen nach einem der Ansprüche 1 bis 5,
wobei jeder der Vielzahl von weiteren Sendeempfängern, der als ein Weiterleitungsknoten (42) betrieben wird, dazu ausgelegt ist, jedem der Vielzahl von anderen weiteren Sendeempfängern (41, 43, 44) einzeln sowie dem Quellsendeempfänger (40) anzuzeigen, an einer NACK-Signalisierung mit Bezug auf den Weiterleitungsknoten (42) teilzunehmen und/oder nicht an einer NACK-Signalisierung mit Bezug auf den Weiterleitungsknoten (42) teilzunehmen, und wobei jeder der Vielzahl von anderen weiteren Sendeempfängern (41, 43, 44) und der Quellsendeempfänger (40) dazu ausgelegt ist
- an einer NACK-Signalisierung mit Bezug auf den Weiterleitungsknoten (42) teilzunehmen, wenn der Weiterleitungsknoten (42) angezeigt hat, an einer NACK-Signalisierung mit Bezug auf den Weiterleitungsknoten (42) teilzunehmen, und
- nicht an einer NACK-Signalisierung mit Bezug auf den Weiterleitungsknoten (42) teilzunehmen, wenn der Weiterleitungsknoten (42) angezeigt hat, nicht an einer NACK-Signalisierung mit Bezug auf den Weiterleitungsknoten (42) teilzunehmen.

7. Kommunikationssystem (2) für direkte Funkübertragungen nach einem der Ansprüche 1 bis 6,
wobei der Quellsendeempfänger (40) dazu ausgelegt ist, ein Datenpaket als ein Multicastdatenpaket zur Vielzahl von weiteren Sendeempfängern (41, 42, 43, 44) zu übertragen, wobei jeder der Vielzahl von weiteren Sendeempfängern (41, 42, 43, 44) dazu ausgelegt ist, wenn er das Datenpaket nicht erfolgreich empfangen hat,
- und wenn der Quellsendeempfänger (40) angezeigt hat, an einer NACK-Signalisierung mit Bezug auf den Quellsendeempfänger (40) teilzunehmen, ein NACK-Signal zum Quellsendeempfänger (40) zu übertragen, das anzeigt, dass das Datenpaket nicht erfolgreich empfangen wurde,
- und wenn der Quellsendeempfänger (40) angezeigt hat, an einer NACK-Signalisierung mit Bezug auf den Quellsendeempfänger (40) nicht teilzunehmen, kein NACK-Signal zum Quellsendeempfänger (40) zu übertragen.

8. Kommunikationsverfahren für direkte Funkübertragungen, das Folgendes umfasst:
- einzelnes Anzeigen durch einen Quellsendeempfänger (40) für jeden einer Vielzahl von weiteren Sendeempfängern (41, 42, 43, 44)
o an einer Nichtbestätigungs(NACK)-Signalisierung mit Bezug auf den Quellsendeempfänger (40) teilzunehmen, wenn eine Kanalqualität des einzelnen der weiteren Sendeempfänger (41, 42, 43, 44) über einem Kanalqualitätsschwellwert liegt, und
o nicht an einer NACK-Signalisierung mit Bezug auf den Quellsendeempfänger (40) teilzunehmen, wenn die Kanalqualität des einzelnen der weiteren Sendeempfänger (41, 42, 43, 44) unter dem Kanalqualitätsschwellwert liegt,
- an einer NACK-Signalisierung mit Bezug auf den Quellsendeempfänger (40) durch die weiteren Sendeempfänger (41, 42, 43, 44) teilzunehmen, denen der Quellsendeempfänger (40) angezeigt hat, an einer NACK-Signalisierung mit Bezug auf den Quellsendeempfänger (40) teilzunehmen, und
- nicht an einer NACK-Signalisierung mit Bezug auf den Quellsendeempfänger (40) durch die weiteren Sendeempfänger (41, 42, 43, 44) teilzunehmen, denen der Quellsendeempfänger (40) angezeigt hat, nicht an einer NACK-Signalisierung mit Bezug auf den Quellsendeempfänger (40) teilzunehmen.

9. Computerprogramm, das Anweisungen umfasst, die, wenn das Programm von einem Computer ausgeführt wird, den Computer veranlassen, das Verfahren nach Anspruch 8 umzusetzen.

## Revendications

1. Système de communication par transmission radio directe (2), comprenant un émetteur-récepteur source (40), et une pluralité d'émetteurs-récepteurs supplémentaires (41, 42, 43, 44),
dans lequel l'émetteur-récepteur source (40) est configuré pour indiquer séparément à chacun de la pluralité d'émetteurs-récepteurs supplémentaires (41, 42, 43, 44) de
- participer à une signalisation d'accusé de réception négatif, NACK, en ce qui concerne l'émetteur-récepteur source (40), si une qualité de canal de chaque émetteur-récepteur supplémentaire séparé (41, 42, 43, 44) est supérieure à un seuil de qualité de canal, et
- ne pas participer à la signalisation NACK en ce qui concerne l'émetteur-récepteur source (40), si la qualité de canal de chaque émetteur-récepteur supplémentaire séparé (41, 42, 43, 44) est inférieure au seuil de qualité de canal, et
dans lequel chacun de la pluralité d'émetteurs-récepteurs supplémentaires (41, 42, 43, 44) est configuré pour
- participer à la signalisation NACK en ce qui concerne l'émetteur-récepteur source (40), si l'émetteur-récepteur source (40) a indiqué de participer à la signalisation NACK en ce qui concerne l'émetteur-récepteur source (40), et
- ne pas participer à la signalisation NACK en ce qui concerne l'émetteur-récepteur source (40), si l'émetteur-récepteur source (40) a indiqué de ne pas participer à la signalisation NACK en ce qui concerne l'émetteur-récepteur source (40).

2. Système de communication par transmission radio directe (2) selon la revendication 1,
dans lequel l'émetteur-récepteur source est configuré pour indiquer de participer à la signalisation NACK et/ou de ne pas participer à la signalisation NACK, en utilisant un bit de participation NACK.

3. Système de communication par transmission radio directe (2) selon la revendication 1 ou 2,
dans lequel l'émetteur-récepteur source (40) et/ou chacun de la pluralité d'émetteurs-récepteurs supplémentaires (41, 42, 43, 44) sont configurés pour déterminer une qualité de canal de transmission de canaux de transmission entre l'émetteur-récepteur source et chacun de la pluralité d'émetteurs-récepteurs supplémentaires (41, 42, 43, 44).

4. Système de communication par transmission radio directe (2) selon la revendication 3,
dans lequel au moins un de la pluralité d'émetteurs-récepteurs supplémentaires (42) connectés à l'émetteur-récepteur source (40) par un canal de transmission d'une qualité de canal supérieure à un seuil de qualité est configuré pour fonctionner comme un nœud relais en ce qui concerne l'émetteur-récepteur source et au moins un de la pluralité d'émetteurs-récepteurs supplémentaires (44) connectés à l'émetteur-récepteur source (40) par un canal de transmission d'une qualité de canal inférieure au seuil de qualité.

5. Système de communication par transmission radio directe (2) selon la revendication 4,
dans lequel l'émetteur-récepteur source (40) est configuré pour donner des instructions à chacun de la pluralité d'émetteurs-récepteurs supplémentaires connectés à l'émetteur-récepteur source (40) par l'intermédiaire d'un nœud relais (42) pour soit
- ne pas participer à la signalisation NACK en ce qui concerne l'émetteur-récepteur source (40), soit
- participer à la signalisation NACK en ce qui concerne l'émetteur-récepteur source (40).

6. Système de communication par transmission radio directe (2) selon l'une quelconque des revendications 1 à 5,
dans lequel chacun de la pluralité d'émetteurs-récepteurs supplémentaires fonctionnant comme un nœud relais (42) est configuré pour indiquer séparément à chacun de la pluralité d'autres émetteurs-récepteurs supplémentaires (41, 43, 44) et à l'émetteur-récepteur source (40) de participer à la signalisation NACK en ce qui concerne le nœud relais (42), et/ou de ne pas participer à la signalisation NACK en ce qui concerne le nœud relais (42), et
dans lequel chacun de la pluralité d'autres émetteurs-récepteurs supplémentaires (41, 43, 44) et l'émetteur-récepteur source (40) sont configurés
- pour participer à la signalisation NACK en ce qui concerne le nœud relais (42), si le nœud relais (42) a indiqué de participer à la signalisation NACK en ce qui concerne le nœud relais (42), et
- pour pas participer à la signalisation NACK en ce qui concerne le nœud relais (42), si le nœud relais (42) a indiqué de ne pas participer à la signalisation NACK en ce qui concerne le nœud relais (42).

7. Système de communication par transmission radio directe (2) selon l'une quelconque des revendications 1 à 6,
dans lequel l'émetteur-récepteur source (40) est configuré pour transmettre un paquet de données, sous forme d'un paquet de données multidiffusion, à la pluralité d'émetteurs-récepteurs supplémentaires (41, 42, 43, 44),
dans lequel chacun de la pluralité d'émetteurs-récepteurs supplémentaires (41, 42, 43, 44) est configuré, s'il n'a pas reçu le paquet de données avec succès,
- et si l'émetteur-récepteur source (40) a indiqué de participer à la signalisation NACK en ce qui concerne l'émetteur-récepteur source (40), pour transmettre un signal NACK à l'émetteur-récepteur source (40) indiquant que le paquet de données n'a pas été reçu avec succès,
- et si l'émetteur-récepteur source (40) a indiqué de ne pas participer à la signalisation NACK en ce qui concerne l'émetteur-récepteur source (40), pour ne pas transmettre de signal NACK à l'émetteur-récepteur source (40).

8. Procédé de communication par transmission radio directe, comprenant les étapes consistant à :
- indiquer séparément, par un émetteur-récepteur source (40), à chacun d'une pluralité d'émetteurs-récepteurs supplémentaires (41, 42, 43, 44), de
o participer à une signalisation d'accusé de réception négatif, NACK, en ce qui concerne l'émetteur-récepteur source (40), si une qualité de canal de chaque émetteur-récepteur supplémentaire séparé (41, 42, 43, 44) est supérieure à un seuil de qualité de canal, et
o ne pas participer à la signalisation NACK en ce qui concerne l'émetteur-récepteur source (40), si la qualité de canal de chaque émetteur-récepteur supplémentaire séparé (41, 42, 43, 44) est inférieure au seuil de qualité de canal,
- participer à la signalisation NACK en ce qui concerne l'émetteur-récepteur source (40), par les émetteurs-récepteurs supplémentaires (41, 42, 43, 44) auxquels l'émetteur-récepteur source (40) a indiqué de participer à la signalisation NACK en ce qui concerne l'émetteur-récepteur source (40), et
- ne pas participer à la signalisation NACK en ce qui concerne l'émetteur-récepteur source (40), par les émetteurs-récepteurs supplémentaires (41, 42, 43, 44) auxquels l'émetteur-récepteur source (40) a indiqué de ne pas participer à la signalisation NACK en ce qui concerne l'émetteur-récepteur source (40).

9. Programme informatique comprenant des instructions qui, lorsque le programme est exécuté par un ordinateur, amènent l'ordinateur à mettre en œuvre le procédé de la revendication 8 .
